# FASCICULE DE BREVET EUROPEEN

(11) **EP 4 584 006 B1**
(45) Date de publication et mention de la délivrance du brevet: **22.04.2026**
(21) Numéro de dépôt: 23762471.3
(22) Date de dépôt: 29.08.2023
(51) Int. Cl.: B01D 53/22

(54) **PROCÉDÉ ET APPAREIL DE SÉPARATION D'UN DÉBIT D'ALIMENTATION CONTENANT DE L'HYDROGÈNE, DU DIOXYDE DE CARBONE, ET AU MOINS UN DES COMPOSANTS CHOISIS DANS LA LISTE LE MONOXYDE DE CARBONE, LE MÉTHANE OU L'AZOTE**
VERFAHREN UND VORRICHTUNG ZUR TRENNUNG EINES WASSERSTOFF, KOHLENDIOXID UND MINDESTENS EINE DER KOMPONENTEN AUS DER LISTE VON KOHLENMONOXID, METHAN ODER STICKSTOFF ENTHALTENDEN EINSATZSTROMS
PROCESS AND APPARATUS FOR SEPARATING A FEED FLOW CONTAINING HYDROGEN, CARBON DIOXIDE, AND AT LEAST ONE OF THE COMPONENTS CHOSEN FROM THE LIST OF CARBON MONOXIDE, METHANE OR NITROGEN

(30) Priorité: 08.09.2022 FR 2208988
(43) Date de publication de la demande: 16.07.2025
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LECLERC, Mathieu, 94503 CHAMPIGNY SUR MARNE (FR); BIGNAUD, Charles, 94503 CHAMPIGNY SUR MARNE (FR)
(74) Mandataire: Air Liquide
(86) Numéro de dépôt international: PCT/EP2023/073739
(87) Numéro de publication internationale: WO 2024/052182

(56) Documents cités:
- WO-A1-2012/064938
- WO-A1-2012/064941
- WO-A1-2012/158673
- FR-A1- 2 953 505
- FR-A1- 3 073 835

## Description

La présente invention est relative à un procédé et appareil de séparation d'un débit d'alimentation contenant de l'hydrogène, du dioxyde de carbone, et au moins un des composants choisis dans la liste le monoxyde de carbone, le méthane ou l'azote. Le procédé comprend une étape de séparation membranaire d'un mélange contenant majoritairement de l'hydrogène et du dioxyde de carbone et en plus au moins un autre composant choisi parmi le monoxyde de carbone, le méthane et l'azote.

Un mélange contenant majoritairement de l'hydrogène et du dioxyde de carbone a une composition telle qu'au moins 50% mol du mélange est composé d'hydrogène et de dioxyde de carbone.

La capture de dioxyde de carbone (CO₂) par un procédé de distillation et/ou condensation partielle alimenté par un gaz résiduaire d'une unité de production d'hydrogène (H₂) comprenant une unité de séparation d'hydrogène par adsorption avec bascule de pression (en anglais « Pressure Swing Adsorption » ou PSA) est connue. Le gaz résiduaire est appauvri en hydrogène par rapport au gaz alimentant cette unité de séparation. L'unité de séparation peut être combinée à une séparation membranaire du gaz appauvri en dioxyde de carbone produit par le procédé de distillation et/ou de condensation partielle. Ces membranes ont pour but de séparer le CO2 et l'H2 du reste des gaz en deux étapes. Le perméat de la première membrane est recyclé au PSA, alors que le perméat de la seconde membrane est lui renvoyé dans la compression en amont de la séparation par distillation et/ou par condensation partielle pour être comprimé. Le résidu des membranes est encore sous pression, il est détendu par une vanne avant de régénérer les sécheurs. Cette énergie pourrait être récupérée pour améliorer l'efficacité de ce procédé de capture de CO2.

US4639257 décrit le passage du gaz résiduaire de la séparation cryogénique à travers un économiseur avant d'être envoyé dans une première membrane. Le perméat de cette première membrane est recyclé en amont d'un compresseur du gaz alimentant la séparation cryogénique. WO2012/064938 A1 décrit un procédé de production de dioxyde de carbone et d'hydrogène.

L'invention propose un procédé amélioré avec un schéma d'intégration d'au moins une turbine couplée avec au moins un surpresseur pour mieux valoriser l'énergie de la détente du second résidu des membranes.

Selon un objet de l'invention, il est prévu un procédé de séparation d'un débit d'alimentation contenant de l'hydrogène, du dioxyde de carbone, et au moins un des composants choisis dans la liste le monoxyde de carbone, le méthane ou l'azote et éventuellement de l'eau comprenant les étapes suivantes :
a) Compression du débit d'alimentation dans un compresseur , épuration en eau du débit d'alimentation dans une unité de purification par adsorption, et/ou refroidissement du débit épuré en eau dans une ligne d'échange , séparation du débit d'alimentation épuré et/ou refroidi par condensation partielle et/ou par distillation pour former un débit riche en dioxyde de carbone et un mélange contenant majoritairement de l'hydrogène, du dioxyde de carbone et au moins un des composants choisis dans la liste le monoxyde de carbone, le méthane ou l'azote et
b) Séparation du mélange par un procédé de séparation membranaire comprenant les étapes suivantes :
   i. éventuellement chauffage du mélange dans un échangeur de chaleur jusqu'à une température entre 60 et 100°C.
   ii. perméation du mélange , éventuellement réchauffé, dans une première membrane permettant d'obtenir un premier perméat enrichi en hydrogène et en dioxyde de carbone par rapport au mélange et un premier résidu appauvri en hydrogène et dioxyde de carbone par rapport au mélange.
   iii. éventuellement refroidissement d'au moins une partie du premier perméat dans l'échangeur de chaleur.
   iv. compression du premier perméat, éventuellement refroidi, dans un premier surpresseur.
   v. éventuellement refroidissement d'au moins une partie du premier perméat comprimé dans le premier surpresseur dans l'échangeur de chaleur.
   vi. perméation du premier résidu, de préférence sans l'avoir refroidi, dans une seconde membrane permettant d'obtenir un second perméat enrichi en hydrogène et dioxyde de carbone par rapport au premier résidu et un second résidu appauvri en hydrogène et dioxyde de carbone par rapport au premier résidu.
   vii. éventuellement refroidissement d'au moins une partie du second perméat dans l'échangeur de chaleur.
   viii. compression du second perméat, éventuellement refroidi, dans un deuxième surpresseur.
   ix. éventuellement refroidissement d'au moins une partie du second perméat comprimé dans l'échangeur de chaleur, et
   x. détente du second résidu dans au moins une turbine entraînant le premier et/ou le deuxième surpresseur .

Selon d'autres aspects facultatifs :
- au moins une partie du second résidu détendu est envoyée à l'unité de purification comme gaz de régénération.
- au moins une partie du second résidu détendu est envoyée apporter du froid à la ligne d'échange.
- au moins une partie du second résidu détendu est envoyée à des brûleurs d'un reformeur.
- le mélange est chauffé dans l'échangeur de chaleur, éventuellement jusqu'à une température entre 60 et 100°C.
- le mélange est chauffé par échange de chaleur indirect dans l'échangeur de chaleur avec au moins une partie d'au moins un des débits suivants : premier perméat, premier résidu, second perméat, second résidu.
- le second résidu est détendu dans deux turbines en série, chacune desquelles entraîne l'un des premier et deuxième surpresseurs.
- le second résidu détendu dans les deux turbines se trouve après la détente à une pression entre 3 et 5 bara et/ou à une température d'entre -30 et -55°C.
- le débit d'alimentation est comprimé dans un compresseur en amont de la condensation partielle et/ou de la distillation et le second perméat comprimé par le deuxième surpresseur est envoyé être comprimé dans le compresseur.
- le second résidu est enrichi en monoxyde de carbone et/ou méthane et/ou azote par rapport au premier résidu

Selon un autre objet de l'invention, il est prévu un appareil de séparation d'un débit d'alimentation contenant de l'hydrogène, du dioxyde de carbone et au moins un des composants choisis dans la liste le monoxyde de carbone, le méthane ou l'azote comprenant un compresseur , une unité de purification et/ou une ligne d'échange, des moyens pour envoyer le débit d'alimentation comprimé dans le compresseur à l'unité de purification et/ou à la ligne d'échange, une unité de séparation du débit d'alimentation épuré et/ou refroidi par condensation partielle et/ou par distillation pour former un débit riche en dioxyde de carbone et un mélange contenant majoritairement de l'hydrogène, du dioxyde de carbone et au moins un des composants choisis dans la liste le monoxyde de carbone, le méthane ou l'azote, des moyens pour envoyer le débit d'alimentation de l'unité de purification et/ou de la ligne d'échange à l'unité de séparation, un appareil de séparation membranaire comprenant une première membrane , une conduite pour envoyer du mélange se séparer dans la première membrane permettant d'obtenir un premier perméat enrichi en hydrogène et en dioxyde de carbone par rapport au mélange et un premier résidu appauvri en hydrogène et dioxyde de carbone par rapport au mélange, un premier surpresseur, une conduite pour envoyer du premier perméat au premier surpresseur pour être comprimé, une seconde membrane, une conduite pour envoyer du premier résidu, de préférence sans l'avoir refroidi, dans la seconde membrane permettant d'obtenir un second perméat enrichi en hydrogène et dioxyde de carbone par rapport au premier résidu et un second résidu appauvri en hydrogène et dioxyde de carbone par rapport au premier résidu, un deuxième surpresseur, une conduite pour envoyer du second perméat au deuxième surpresseur, au moins une turbine de détente reliée pour détendre le second résidu et pour entraîner le premier et/ou le deuxième surpresseur.

Selon d'autres caractéristiques facultatives, l'appareil comprend :
- des moyens pour envoyer du second résidu de l'au moins une turbine de détente à l'unité de purification comme gaz de régénération.
- des moyens pour envoyer du second résidu de l'au moins une turbine de détente à la ligne d'échange pour apporter du froid.
- des moyens pour envoyer du second résidu de l'au moins une turbine de détente à des brûleurs d'un reformeur.
- le débit d'alimentation est un gaz résiduaire d'une unité d'adsorption à bascule de pression.
- l'unité de purification et des moyens pour envoyer le débit d'alimentation comprimé dans le compresseur à l'unité de purification.
- la ligne d'échange et des moyens pour envoyer le débit d'alimentation comprimé dans le compresseur à la ligne d'échange.

De préférence l'appareil comprend deux turbines de détente en série reliées pour entrainer chacune un des premier et deuxième surpresseurs.

L'invention sera décrite de manière plus détaillée en se référant à la figure :

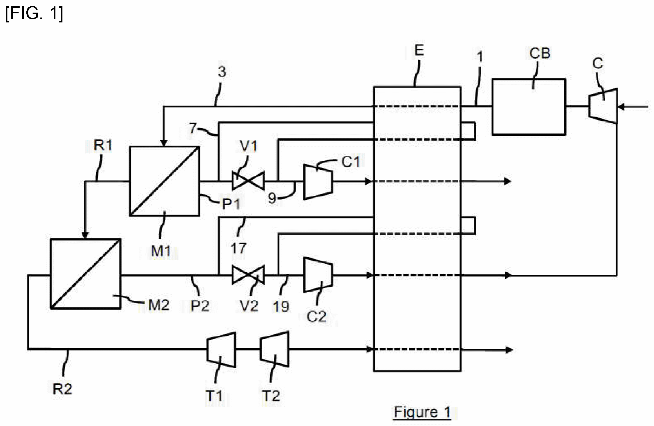

[Fig.1] représente un procédé de séparation selon l'invention.

Une unité de production d'hydrogène (H2) comprenant une unité de séparation d'hydrogène par adsorption avec bascule de pression (en anglais Pressure Swing Adsorption ou PSA) produit un gaz riche en hydrogène et un gaz résiduaire appauvri en hydrogène par rapport au gaz d'alimentation mais contenant également du dioxyde de carbone ainsi que de l'azote et/ou du méthane et/ou du monoxyde de carbone.

Le gaz résiduaire est comprimé par un compresseur C, séché par des sécheurs d'une unité de purification par adsorption, refroidi dans un échangeur de chaleur dite ligne d'échange et puis séparé par condensation partielle et/ou distillation pour produire un fluide riche en dioxyde de carbone et un gaz 1 appauvri en dioxyde de carbone. Ce fluide et le gaz se réchauffent dans la ligne d'échange. Cette séparation à basse température est désignée par le sigle CB.

Ce gaz 1 appauvri en dioxyde de carbone contient néanmoins du dioxyde de carbone, de l'hydrogène ainsi que de l'azote et/ou du méthane et/ou du monoxyde de carbone.

Le gaz 1 qui se trouve à une pression entre 40 et 70 bara et à une température entre 0 et 50°C est éventuellement réchauffé dans un échangeur de chaleur E jusqu'à une température entre 60 et 100°C et plus préférentiellement entre 65 et 90°C.

A cette température et cette pression ou sinon sans avoir été réchauffé, il est séparé par perméation dans une première membrane M1 pour produire un premier perméat P1 enrichi en hydrogène et dioxyde de carbone par rapport au mélange et appauvri en azote et/ou monoxyde de carbone et/ou méthane par rapport au mélange à entre 15 et 30 bara et plus spécifiquement entre 17 et 25 bara, ce qui est inférieure à la pression d'entrée de l'unité de séparation d'hydrogène par adsorption avec bascule de pression.

Le premier perméat P1 est donc comprimé dans un surpresseur C1 pour atteindre une pression suffisante pour le recycler en amont du PSA entre 20 et 40 bara et plus spécifiquement entre 20 et 30 bara. Ensuite tout ou une partie du perméat peut se refroidir dans l'échangeur de chaleur E et est envoyé se séparer dans l'unité de séparation d'hydrogène par adsorption avec bascule de pression.

Le premier résidu R1 appauvri en hydrogène et dioxyde de carbone et enrichi en azote et/ou monoxyde de carbone et/ou méthane de la première membrane est envoyé à une deuxième membrane M2.

La pression du deuxième perméat P2, enrichi en hydrogène et dioxyde de carbone et appauvri en azote et/ou monoxyde de carbone et/ou méthane, produit par la deuxième membrane M2 est inférieure à la pression de l'étage du compresseur C vers lequel il est recyclé, cette pression se situe entre 4 et 11 bara et plus spécifiquement entre 5 et 9 bara.

Le deuxième perméat P2 est donc comprimé dans un deuxième surpresseur C2 pour atteindre une pression suffisante pour le recycler à un étage du compresseur C en amont de la séparation cryogénique pour obtenir une pression entre 5 et 15 bara et plus spécifiquement entre 8 et 11 bara. Tout ou une partie du deuxième perméat P2 peut se refroidir dans l'échangeur de chaleur E et est envoyé de préférence à l'entrée du compresseur C.

Le deuxième résidu appauvri en hydrogène et dioxyde de carbone et enrichi en azote et/ou monoxyde de carbone et/ou méthane produit par la deuxième membrane M2 est détendu dans au moins une turbine, ici deux turbines en série T1 et T2 qui entraînent les deux surpresseurs C1, C2 pour obtenir un gaz à basse pression (3-5 bara) et avec une température basse d'entre -30 et -55°C.

Ce gaz R2 détendu dans les deux turbines T1, T2 peut être utilisé pour régénérer les sécheurs en amont de la séparation froide.

Les étapes suivantes du procédé, décrites ci-dessus, sont en fait facultatives :
- Chauffage du gaz résiduaire 1 provenant de la séparation par distillation et/ou condensation partielle à travers un échangeur E avant la première séparation membranaire pour atteindre une température entre 60 et 100°C et plus préférentiellement entre 65 et 90°C.
- Refroidissement du premier perméat P1 à travers l'échangeur E pour atteindre une température entre 15 et 80°C avant sa compression. Cette étape peut être réalisée comme illustrée en refroidissant uniquement une partie 7 du perméat P1 jusqu'à une température plus froide (entre 15 et 30°C par exemple) qui est ensuite combinée avec le reste du perméat.
- Refroidissement de tout ou une partie du gaz en sortie du premier surpresseur C1 dans l'échangeur de chaleur E avant recyclage en amont du PSA pour atteindre une gamme de température entre 10 et 50°C et plus spécifiquement entre 20 et 40°C.
- Refroidissement du second perméat P2 à travers l'échangeur de chaleur E pour atteindre une température entre 10 et 50°C. Cette étape peut être réalisée en refroidissant uniquement une partie 17 du perméat jusqu'à une température plus froide (entre 15 et 30°C par exemple) qui est ensuite combinée avec le reste du perméat chaud.
- Refroidissement de tout ou partie du gaz en sortie du second surpresseur dans l'échangeur E avant recyclage en amont de la séparation cryogénique pour atteindre une température entre 20 et 80°C et plus spécifiquement entre 30 et 70°C.
- Envoi du gaz froid en sortie de la seconde turbine T2 dans l'échangeur principal de la séparation cryogénique où se refroidit le gaz d'alimentation provenant d'une unité de production d'hydrogène (H2) comprenant une unité de séparation d'hydrogène par adsorption avec bascule de pression.

Une variante est possible :
- Ajouter un réchauffeur en aval des turbines T1, T2 pour obtenir un gaz plus chaud en entrée des turbines. Dans ce cas, le gaz en sortie de la seconde turbine n'est pas envoyé dans la partie cryogénique.

Cette disposition permet de baisser la pression des deux perméats par exemple en recyclant le premier perméat au PSA et le second au même étage de la machine en amont de la séparation cryogénique, grâce aux surpresseurs. La diminution de la pression des perméats génère des rapports de pression plus importants à travers les deux membranes, ce qui augmente l'efficacité de séparation des membranes.

Cette invention peut être utilisée de deux manières différentes : soit en gardant le nombre de membranes constant (ce qui permet d'obtenir de meilleurs rendements de CO2 et H2 (à coût énergétique spécifique marginal), ou alors en diminuant le nombre de membranes pour obtenir des rendements similaires à la configuration sans turbomachine (dans ce cas l'énergie spécifique de capture du CO2 est réduite).

Le tableau suivant illustre les différences de rendements des membranes selon l'invention et sans la turbine entraînant le surpresseur avec la même surface de membrane et la même composition en entrée des membranes.

Sur le premier étage M1, les rendements sont améliorés entre 14 et 15% respectivement pour l'H2 et le CO2.

Sur le deuxième étage M2, les rendements sont améliorés entre 6 et 10% respectivement pour l'H2 et le CO2.

**[TAB 1]**

| Rendements pour le perméat P1, P2 | | | | |
|---|---|---|---|---|
| | | Art antérieur | Invention | % |
| **M1** | | | | |
| Rendement CO2 | % | 64 | 74 | 15% |
| Rendement H2 | % | 75 | 86 | 14% |

| **M2** | | | | |
|---|---|---|---|---|
| Rendement CO2 | % | 76 | 84 | 10% |
| Rendement H2 | % | 88 | 94 | 6% |

Au moins une partie du second résidu R2 détendu dans l'au moins une turbine T1, T2 est envoyée à l'unité de purification comme gaz de régénération et/ou au moins une partie du second résidu R2 détendu est envoyée apporter du froid à la ligne d'échange E et/ou au moins une partie du second résidu détendu est envoyée à des brûleurs d'un reformeur. Ce reformeur peut alimenter un PSA dont le résiduaire est le gaz envoyé au compresseur C.

## Revendications

1. Procédé de séparation d'un débit d'alimentation contenant de l'hydrogène, du dioxyde de carbone, et au moins un des composants choisis dans la liste le monoxyde de carbone, le méthane ou l'azote et éventuellement de l'eau comprenant les étapes suivantes :
a) Compression du débit d'alimentation dans un compresseur (C), épuration du débit d'alimentation en eau dans une unité de purification par adsorption, et/ou refroidissement du débit épuré en eau dans une ligne d'échange , séparation du débit d'alimentation épuré et/ou refroidi par condensation partielle et/ou par distillation (CB) pour former un débit riche en dioxyde de carbone et un mélange (1) contenant majoritairement de l'hydrogène, du dioxyde de carbone et au moins un des composants choisis dans la liste le monoxyde de carbone, le méthane ou l'azote et
b) Séparation du mélange par un procédé de séparation membranaire comprenant les étapes suivantes :
i) éventuellement chauffage du mélange (1) dans un échangeur de chaleur (E) jusqu'à une température entre 60 et 100°C.
ii) perméation du mélange (3), éventuellement réchauffé, dans une première membrane (M1) permettant d'obtenir un premier perméat (P1) enrichi en hydrogène et en dioxyde de carbone par rapport au mélange et un premier résidu (R1) appauvri en hydrogène et dioxyde de carbone par rapport au mélange.
iii) éventuellement refroidissement d'au moins une partie du premier perméat dans l'échangeur de chaleur.
iv) compression du premier perméat, éventuellement refroidi, dans un premier surpresseur (C1).
v) éventuellement refroidissement d'au moins une partie du premier perméat comprimé dans le premier surpresseur dans l'échangeur de chaleur
vi) perméation du premier résidu, de préférence sans l'avoir refroidi, dans une seconde membrane (M2) permettant d'obtenir un second perméat (P2) enrichi en hydrogène et dioxyde de carbone par rapport au premier résidu et un second résidu (R2) appauvri en hydrogène et dioxyde de carbone par rapport au premier résidu.
vii) éventuellement refroidissement d'au moins une partie du second perméat dans l'échangeur de chaleur
viii) compression du second perméat, éventuellement refroidi, dans un deuxième surpresseur (C2)
ix) éventuellement refroidissement d'au moins une partie du second perméat comprimé dans l'échangeur de chaleur, et
x) détente du second résidu dans au moins une turbine (T1,T2) entraînant le premier et/ou le deuxième surpresseur .

2. Procédé selon la revendication 1 dans lequel au moins une partie du second résidu (R2) détendu est envoyée à l'unité de purification comme gaz de régénération et/ou au moins une partie du second résidu détendu est envoyée apporter du froid à la ligne d'échange et/ou au moins une partie du second résidu détendu est envoyée à des brûleurs d'un reformeur.

3. Procédé selon la revendication 1 ou 2 dans lequel le mélange (3) est chauffé dans l'échangeur de chaleur (E), éventuellement jusqu'à une température entre 60 et 100°C.

4. Procédé selon la revendication 3 dans lequel le mélange (1) est chauffé par échange de chaleur indirect dans l'échangeur de chaleur avec au moins une partie d'au moins un des débits suivants : premier perméat (P1), premier résidu (R1), second perméat (P2), second résidu (R2).

5. Procédé selon l'une des revendications précédentes dans lequel le second résidu est détendu dans deux turbines (T1, T2) en série, chacune desquelles entraîne l'un des premier et deuxième surpresseurs (C1, C2).

6. Procédé selon la revendication 5 dans lequel le résidu (R2) détendu dans les deux turbines (T1, T2) se trouve après la détente à une pression entre 3 et 5 bara et/ou à une température d'entre -30 et -55°C.

7. Procédé selon l'une des revendications 1 à 6 dans lequel le débit d'alimentation est comprimé dans un compresseur (C) en amont de la condensation partielle et/ou de la distillation (CB) et le second perméat (P2) comprimé par le deuxième surpresseur (C2) est envoyé être comprimé dans le compresseur.

8. Appareil de séparation d'un débit d'alimentation contenant de l'hydrogène, du dioxyde de carbone et au moins un des composants choisis dans la liste le monoxyde de carbone, le méthane ou l'azote comprenant un compresseur (C), une unité de purification et/ou une ligne d'échange (E), des moyens pour envoyer le débit d'alimentation comprimé dans le compresseur à l'unité de purification et/ou à la ligne d'échange, une unité de séparation du débit d'alimentation épuré et/ou refroidi par condensation partielle et/ou par distillation (CB) conçue pour former un débit riche en dioxyde de carbone et un mélange (1) contenant majoritairement de l'hydrogène, du dioxyde de carbone et au moins un des composants choisis dans la liste le monoxyde de carbone, le méthane ou l'azote, des moyens pour envoyer le débit d'alimentation de l'unité de purification et/ou de la ligne d'échange à l'unité de séparation, un appareil de séparation membranaire comprenant une première membrane (M1), une conduite pour envoyer du mélange se séparer dans la première membrane conçue pour obtenir un premier perméat (P1) enrichi en hydrogène et en dioxyde de carbone par rapport au mélange et un premier résidu (R1) appauvri en hydrogène et dioxyde de carbone par rapport au mélange, un premier surpresseur,(C1), une conduite pour envoyer du premier perméat au premier surpresseur pour être comprimé, une seconde membrane (M2), une conduite pour envoyer du premier résidu, dans la seconde membrane permettant d'obtenir un second perméat (P2) enrichi en hydrogène et dioxyde de carbone par rapport au premier résidu et un second résidu (R2) appauvri en hydrogène et dioxyde de carbone par rapport au premier résidu, la conduite de préférence n'étant pas reliée à des moyens de refroidissement en amont de la seconde membrane, un deuxième surpresseur (C2), une conduite pour envoyer du second perméat au deuxième surpresseur, au moins une turbine de détente (T1, T2) reliée pour détendre le second résidu et pour entraîner le premier et/ou le deuxième surpresseur.

9. Appareil selon la revendication 8 comprenant des moyens pour envoyer du second résidu (R2) de l'au moins une turbine de détente (T1, T2) à l'unité de purification comme gaz de régénération.

10. Appareil selon la revendication 8 ou 9 comprenant des moyens pour envoyer du second résidu (R2) de l'au moins une turbine de détente (T1, T2) à la ligne d'échange (E) pour apporter du froid.

11. Appareil selon la revendication 8 ou 9 ou 10 comprenant des moyens pour envoyer du second résidu (R2) de l'au moins une turbine de détente (T1, T2) à des brûleurs d'un reformeur.

12. Appareil selon l'une des revendications 8 à 11 dans lequel le débit d'alimentation est un gaz résiduaire d'une unité d'adsorption à bascule de pression.

13. Appareil selon l'une des revendications 8 à 12 comprenant l'unité de purification et des moyens pour envoyer le débit d'alimentation comprimé dans le compresseur (C) à l'unité de purification.

14. Appareil selon l'une des revendications 8 à 11 comprenant la ligne d'échange (E) et des moyens pour envoyer le débit d'alimentation comprimé dans le compresseur (C) à la ligne d'échange.

## Patentansprüche

1. Verfahren zur Trennung eines Zufuhrstroms, der Wasserstoff, Kohlendioxid und mindestens eine der aus der Liste von Kohlenmonoxid, Methan oder Stickstoff ausgewählten Komponenten und gegebenenfalls Wasser enthält, umfassend die folgenden Schritte: a) Kompression des Zufuhrstroms in einem Kompressor (C), Wasserreinigung des Zufuhrstroms in einer Reinigungseinheit durch Adsorption und/oder Abkühlen des wassergereinigten Stroms in einer Wärmetauscherleitung, Trennung des gereinigten und/oder abgekühlten Zufuhrstroms durch partielle Kondensation und/oder durch Destillation (CB), um einen an Kohlendioxid reichen Strom und ein Gemisch (1) zu bilden, das hauptsächlich Wasserstoff, Kohlendioxid und mindestens eine der aus der Liste von Kohlenmonoxid, Methan oder Stickstoff ausgewählten Komponenten enthält, und b) Trennung des Gemischs durch ein Membrantrennverfahren, das die folgenden Schritte umfasst: i) gegebenenfalls Erwärmen des Gemischs (1) in einem Wärmetauscher (E) auf eine Temperatur zwischen 60 und 100 °C. ii) Permeation des Gemischs (3), gegebenenfalls wiedererwärmt, in einer ersten Membran (M1), um ein erstes Permeat (P1), das im Verhältnis zum Gemisch an Wasserstoff und Kohlendioxid angereichert ist, und ein erstes Retentat (R1), das im Verhältnis zum Gemisch an Wasserstoff und Kohlendioxid abgereichert ist, zu erhalten. iii) gegebenenfalls Abkühlen von mindestens einem Teil des ersten Permeats im Wärmetauscher. iv) Kompression des ersten Permeats, gegebenenfalls abgekühlt, in einem ersten Booster (C1). v) gegebenenfalls Abkühlen von mindestens einem Teil des im ersten Booster komprimierten ersten Permeats im Wärmetauscher vi) Permeation des ersten Retentats, vorzugsweise ohne es abgekühlt zu haben, in einer zweiten Membran (M2), um ein zweites Permeat (P2), das im Verhältnis zum ersten Retentat an Wasserstoff und Kohlendioxid angereichert ist, und ein zweites Retentat (R2), das im Verhältnis zum ersten Retentat an Wasserstoff und Kohlendioxid abgereichert ist, zu erhalten. vii) gegebenenfalls Abkühlen von mindestens einem Teil des zweiten Permeats im Wärmetauscher viii) Kompression des zweiten Permeats, gegebenenfalls abgekühlt, in einem zweiten Booster (C2) ix) gegebenenfalls Abkühlen von mindestens einem Teil des im Wärmetauscher komprimierten zweiten Permeats, und x) Entspannung des zweiten Retentats in mindestens einer Turbine (T1, T2), die den ersten und/oder den zweiten Booster antreibt.

2. Verfahren nach Anspruch 1, bei dem mindestens ein Teil des entspannten zweiten Retentats (R2) als Regenerationsgas zur Reinigungseinheit geschickt wird und/oder mindestens ein Teil des entspannten zweiten Retentats zur Kühlung zur Wärmetauscherleitung geschickt wird und/oder mindestens ein Teil des entspannten zweiten Retentats zu Brennern eines Reformers geschickt wird.

3. Verfahren nach Anspruch 1 oder 2, bei dem das Gemisch (3) im Wärmetauscher (E) erhitzt wird, gegebenenfalls auf eine Temperatur zwischen 60 und 100 °C.

4. Verfahren nach Anspruch 3, bei dem das Gemisch (1) durch indirekten Wärmeaustausch im Wärmetauscher mit mindestens einem Teil von mindestens einem der folgenden Ströme erhitzt wird: erstes Permeat (P1), erstes Retentat (R1), zweites Permeat (P2), zweites Retentat (R2).

5. Verfahren nach einem der vorhergehenden Ansprüche, bei dem das zweite Retentat in zwei in Reihe geschalteten Turbinen (T1, T2) entspannt wird, von denen jede einen der ersten und zweiten Booster (C1, C2) antreibt.

6. Verfahren nach Anspruch 5, bei dem sich das in den beiden Turbinen (T1, T2) entspannte Retentat (R2) nach der Entspannung auf einem Druck zwischen 3 und 5 bara und/oder auf einer Temperatur zwischen -30 und -55 °C befindet.

7. Verfahren nach einem der Ansprüche 1 bis 6, bei dem der Zufuhrstrom in einem Kompressor (C) stromaufwärts der partiellen Kondensation und/oder Destillation (CB) komprimiert wird und das vom zweiten Booster (C2) komprimierte zweite Permeat (P2) zur Kompression im Kompressor geschickt wird.

8. Vorrichtung zur Trennung eines Zufuhrstroms, der Wasserstoff, Kohlendioxid und mindestens eine der aus der Liste von Kohlenmonoxid, Methan oder Stickstoff ausgewählten Komponenten enthält, umfassend einen Kompressor (C), eine Reinigungseinheit und/oder eine Wärmetauscherleitung (E), Mittel zum Leiten des komprimierten Zufuhrstroms vom Kompressor zur Reinigungseinheit und/oder zur Wärmetauscherleitung, eine Einheit zur Trennung des gereinigten und/oder abgekühlten Zufuhrstroms durch partielle Kondensation und/oder durch Destillation (CB), die dazu ausgelegt ist, einen an Kohlendioxid reichen Strom und ein Gemisch (1) zu bilden, das hauptsächlich Wasserstoff, Kohlendioxid und mindestens eine der aus der Liste von Kohlenmonoxid, Methan oder Stickstoff ausgewählten Komponenten enthält, Mittel zum Leiten des Zufuhrstroms von der Reinigungseinheit und/oder der Wärmetauscherleitung zur Trenneinheit, eine Membrantrennvorrichtung, die eine erste Membran (M1) umfasst, eine Leitung zum Leiten des zu trennenden Gemischs in die erste Membran, die dazu ausgelegt ist, ein erstes Permeat (P1), das im Verhältnis zum Gemisch an Wasserstoff und Kohlendioxid angereichert ist, und ein erstes Retentat (R1), das im Verhältnis zum Gemisch an Wasserstoff und Kohlendioxid abgereichert ist, zu erhalten, einen ersten Booster (C1), eine Leitung zum Leiten des ersten Permeats zum ersten Booster zur Kompression, eine zweite Membran (M2), eine Leitung zum Leiten des ersten Retentats in die zweite Membran, um ein zweites Permeat (P2), das im Verhältnis zum ersten Retentat an Wasserstoff und Kohlendioxid angereichert ist, und ein zweites Retentat (R2), das im Verhältnis zum ersten Retentat an Wasserstoff und Kohlendioxid abgereichert ist, zu erhalten, wobei die Leitung vorzugsweise nicht mit Kühlmitteln stromaufwärts der zweiten Membran verbunden ist, einen zweiten Booster (C2), eine Leitung zum Leiten des zweiten Permeats zum zweiten Booster, mindestens eine Expansionsturbine (T1, T2), die zur Entspannung des zweiten Retentats und zum Antrieb des ersten und/oder des zweiten Boosters verbunden ist.

9. Vorrichtung nach Anspruch 8, umfassend Mittel zum Leiten des zweiten Retentats (R2) von der mindestens einen Expansionsturbine (T1, T2) zur Reinigungseinheit als Regenerationsgas.

10. Vorrichtung nach Anspruch 8 oder 9, umfassend Mittel zum Leiten des zweiten Retentats (R2) von der mindestens einen Expansionsturbine (T1, T2) zur Wärmetauscherleitung (E) zur Kühlung.

11. Vorrichtung nach Anspruch 8 oder 9 oder 10, umfassend Mittel zum Leiten des zweiten Retentats (R2) von der mindestens einen Expansionsturbine (T1, T2) zu Brennern eines Reformers.

12. Vorrichtung nach einem der Ansprüche 8 bis 11, bei der der Zufuhrstrom ein Abgas aus einer Druckwechseladsorptionseinheit ist.

13. Vorrichtung nach einem der Ansprüche 8 bis 12, umfassend die Reinigungseinheit und Mittel zum Leiten des komprimierten Zufuhrstroms vom Kompressor (C) zur Reinigungseinheit.

14. Vorrichtung nach einem der Ansprüche 8 bis 11, umfassend die Wärmetauscherleitung (E) und Mittel zum Leiten des komprimierten Zufuhrstroms vom Kompressor (C) zur Wärmetauscherleitung.

## Claims

1. A method for separating a feed stream containing hydrogen, carbon dioxide, and at least one of the components selected from the list of carbon monoxide, methane or nitrogen and optionally water, comprising the following steps: a) Compression of the feed stream in a compressor (C), water purification of the feed stream in a purification unit by adsorption, and/or cooling of the water-purified stream in an exchange line, separation of the purified and/or cooled feed stream by partial condensation and/or by distillation (CB) to form a stream rich in carbon dioxide and a mixture (1) containing predominantly hydrogen, carbon dioxide and at least one of the components selected from the list of carbon monoxide, methane or nitrogen and b) Separation of the mixture by a membrane separation process comprising the following steps: i) optionally heating the mixture (1) in a heat exchanger (E) to a temperature between 60 and 100°C. ii) permeation of the mixture (3), optionally reheated, in a first membrane (M1) for obtaining a first permeate (P1) enriched in hydrogen and carbon dioxide relative to the mixture and a first retentate (R1) depleted in hydrogen and carbon dioxide relative to the mixture. iii) optionally cooling at least a part of the first permeate in the heat exchanger. iv) compression of the first permeate, optionally cooled, in a first booster (C1). v) optionally cooling at least a part of the first permeate compressed in the first booster in the heat exchanger vi) permeation of the first retentate, preferably without having cooled it, in a second membrane (M2) for obtaining a second permeate (P2) enriched in hydrogen and carbon dioxide relative to the first retentate and a second retentate (R2) depleted in hydrogen and carbon dioxide relative to the first retentate. vii) optionally cooling at least a part of the second permeate in the heat exchanger viii) compression of the second permeate, optionally cooled, in a second booster (C2) ix) optionally cooling at least a part of the second permeate compressed in the heat exchanger, and x) expansion of the second retentate in at least one turbine (T1, T2) driving the first and/or the second booster.

2. The method according to claim 1, wherein at least a part of the expanded second retentate (R2) is sent to the purification unit as regeneration gas and/or at least a part of the expanded second retentate is sent to provide cooling to the exchange line and/or at least a part of the expanded second retentate is sent to burners of a reformer.

3. The method according to claim 1 or 2, wherein the mixture (3) is heated in the heat exchanger (E), optionally to a temperature between 60 and 100°C.

4. The method according to claim 3, wherein the mixture (1) is heated by indirect heat exchange in the heat exchanger with at least a part of at least one of the following streams: first permeate (P1), first retentate (R1), second permeate (P2), second retentate (R2).

5. The method according to one of the preceding claims, wherein the second retentate is expanded in two turbines (T1, T2) in series, each of which drives one of the first and second boosters (C1, C2).

6. The method according to claim 5, wherein the retentate (R2) expanded in the two turbines (T1, T2) is after expansion at a pressure between 3 and 5 bara and/or at a temperature between -30 and -55°C.

7. The method according to any one of claims 1 to 6, wherein the feed stream is compressed in a compressor (C) upstream of the partial condensation and/or distillation (CB) and the second permeate (P2) compressed by the second booster (C2) is sent to be compressed in the compressor.

8. An apparatus for separating a feed stream containing hydrogen, carbon dioxide and at least one of the components selected from the list of carbon monoxide, methane or nitrogen, comprising a compressor (C), a purification unit and/or an exchange line (E), means for sending the compressed feed stream from the compressor to the purification unit and/or to the exchange line, a unit for separating the purified and/or cooled feed stream by partial condensation and/or by distillation (CB) designed to form a stream rich in carbon dioxide and a mixture (1) containing predominantly hydrogen, carbon dioxide and at least one of the components selected from the list of carbon monoxide, methane or nitrogen, means for sending the feed stream from the purification unit and/or the exchange line to the separation unit, a membrane separation apparatus comprising a first membrane (M1), a conduit for sending the mixture to be separated into the first membrane designed to obtain a first permeate (P1) enriched in hydrogen and carbon dioxide relative to the mixture and a first retentate (R1) depleted in hydrogen and carbon dioxide relative to the mixture, a first booster (C1), a conduit for sending the first permeate to the first booster to be compressed, a second membrane (M2), a conduit for sending the first retentate, into the second membrane for obtaining a second permeate (P2) enriched in hydrogen and carbon dioxide relative to the first retentate and a second retentate (R2) depleted in hydrogen and carbon dioxide relative to the first retentate, the conduit preferably not being connected to cooling means upstream of the second membrane, a second booster (C2), a conduit for sending the second permeate to the second booster, at least one expansion turbine (T1, T2) connected to expand the second retentate and to drive the first and/or the second booster.

9. The apparatus according to claim 8, comprising means for sending the second retentate (R2) from the at least one expansion turbine (T1, T2) to the purification unit as regeneration gas.

10. The apparatus according to claim 8 or 9, comprising means for sending the second retentate (R2) from the at least one expansion turbine (T1, T2) to the exchange line (E) to provide cooling.

11. The apparatus according to claim 8 or 9 or 10, comprising means for sending the second retentate (R2) from the at least one expansion turbine (T1, T2) to burners of a reformer.

12. The apparatus according to any one of claims 8 to 11, wherein the feed stream is a waste gas from a pressure swing adsorption unit.

13. The apparatus according to any one of claims 8 to 12, comprising the purification unit and means for sending the compressed feed stream from the compressor (C) to the purification unit.

14. The apparatus according to any one of claims 8 to 11, comprising the exchange line (E) and means for sending the compressed feed stream from the compressor (C) to the exchange line.
